# EUROPEAN PATENT SPECIFICATION

(11) **EP 4 088 125 B1**
(45) Date of publication and mention of the grant of the patent: **14.10.2026**
(21) Application number: 21745065.9
(22) Date of filing: 21.01.2021
(51) Int. Cl.: H02H 1/00, H02H 3/10, H02H 3/02, H02H 3/05

(54) **INTELLIGENT CIRCUIT INTERRUPTION**
INTELLIGENTE SCHALTUNGSUNTERBRECHUNG
INTERRUPTION DE CIRCUIT INTELLIGENTE

(30) Priority: 21.01.2020 US 202062964078 P
(43) Date of publication of application: 16.11.2022
(73) Proprietor: Amber Semiconductor, Inc., Dublin, CA 94568 (US)
(72) Inventor: TELEFUS, Mark, Orinda, CA 94563 (US); CASEY, Thar, Dublin, CA 94568 (US); CASEY, Chris, Dublin, CA 94568 (US)
(74) Representative: Page White Farrer
(86) International application number: PCT/US2021/014320
(87) International publication number: WO 2021/150684

(56) References cited:
- WO-A1-2014/152794
- WO-A1-2018/080614
- GB-A- 2 396 982
- GB-A- 2 556 081
- US-A1- 2007 159 745
- US-A1- 2008 006 607
- US-A1- 2010 296 207
- US-A1- 2015 116 886
- US-A1- 2019 122 834
- US-A1- 2019 207 375

## Description

### Technical Field

This disclosure relates generally to circuit interruption techniques to protect electrical circuits from fault conditions such as arc-fault conditions.

### Background

In general, electrical circuit interrupters are components that are utilized in electrical distribution systems with a given building or home structure to protect branch circuit conductors and electrical loads from being exposed to, e.g., current overload conditions and fault conditions. A current overload condition is defined as operation of equipment in excess of its normal, full-load rating, or a branch circuit in excess of its ampacity which, when the overload persists for a sufficient period of time, would cause damage or dangerous overheating. Fault conditions comprise unintended or accidental load conditions that typically produce much higher over-current conditions than do overloads, depending on the impedance of the fault. A fault producing the maximum over-current condition is referred to as a short-circuit or a "bolted fault."

There are various types of electrical circuit interrupter devices including, but not limited to, arc-fault circuit interrupter (AFCI) devices. AFCI devices are designed to prevent electrical fires that can be caused by potentially dangerous arc-faults in electrical circuits. An arc-fault is an unintentional electrical arcing condition that occurs in an electrical circuit. Arcing can create high intensity heat that ignites surrounding material and causes a fire. An AFCI device is configured to detect an arcing condition in an electrical circuit and break the electric circuit to stop the arcing. An AFCI device is designed to distinguish between harmless electrical arcs that are generated as a result of normal operation of electrical devices (e.g., opening/closing of a contact or switch, operating a motor with brushes, operating household appliances such air conditioners, refrigerators, tools, etc.) and potentially dangerous electrical arcs that are caused by, e.g., damaged wire insulation, loose connections that cause arcing between the connections, broken conductors in electrical cords, etc., which can cause a series arc fault or a parallel arc fault.

By way of specific example, power receptacles (e.g., outlets) with worn contacts are a common cause of electrical arcing which can lead to electrical fires. Over time, the contact springs of a power receptacle become worn with the repeated insertion of electrical plugs, which causes the contact springs to lose tension and degrade the connection between the receptacle contacts and the terminals of the electrical plugs. This degradation in contact connection results in the generation of electrical arcs within the power receptacle which, over time, cause pitting, melting and spattering of the receptacle contacts, which can trigger dangerous electrical fires.

Conventional circuit breakers are typically configured to protect against current overload and short-circuit conditions, and do not protect against electrical arcing conditions that produce erratic, and often reduced current. In fact, arc-fault conditions in a branch circuit typically result in reduced current and voltages, which are not characteristic or indicative of short-circuit or overload conditions for which conventional circuit breakers are designed to protect against. For example, the RMS current value for a parallel arc-fault will be considerably less than the RMS current value of a bolted short-circuit fault. Therefore, a conventional typical 15-amp circuit breaker with no AFCI protection will not be able to clear the arc-fault before a fire is potentially ignited.

GB 2556081 discloses a system and method for protecting a solid-state power controller (SSPC) which supplies power from source to a load. A control circuit is configured to detect a failure in the SSPC, and activate a shunt switch to cause a short circuit that blows a fuse to isolate the SSPC from the power source.

WO 2014/152794 discloses a safety circuit to disrupt power to a heating element of an appliance that is powered through a solid-state switch (e.g., triac) from an AC power source. A low resistance condition of the solid-state switch is sensed by detecting either the current through or voltage across the solid-state switch, when the solid-state switch is not actuated. When a low resistance condition is detected, a fault signal is generated to interrupt power to the heating element by activating a shunt switch of a crowbar circuit to cause a short circuit that blows a fuse.

GB 2396982 discloses a safety circuit in which a controller monitors the temperature of a solid-state relay using a temperature sensor to detect a temperature anomaly. When a temperature anomaly is detected, the controller opens the solid-state relay. If the temperature anomaly persists for a time period, the controller triggers a safety switch to generate a short circuit to blow a fuse and isolate the solid-state relay from a power source.

US 2007/159745 discloses a circuit element for protecting a load circuit.

### Summary

Embodiments of the invention include circuit interrupter devices and methods to protect electrical circuits from fault conditions such as arc-fault conditions.

There is provided a circuit interrupter device according to claim 1.

There is also provided a system according to claim 12.

There is further provided a method according to claim 18.

Other embodiments will be described in the following detailed description of exemplary embodiments, which is to be read in conjunction with the accompanying figures.

### Brief Description of the Drawings

FIG. 1 schematically illustrates an electrical system which comprises an intelligent circuit interrupter device according to an exemplary embodiment of the invention.
FIG. 2 schematically illustrates an exemplary AC waveform of utility supply power under normal operating conditions without arc-fault conditions.
FIG. 3 is a flow diagram of a method for providing circuit interruption, according to an exemplary embodiment of the invention.

### Detailed Description of Exemplary Embodiments

Embodiments of the invention will now be described in further detail with regard to circuit interrupter devices and methods to protect electrical circuits from fault conditions such as arc-fault conditions. The term "exemplary" as used herein means "serving as an example, instance, or illustration". Any embodiment or design described herein as "exemplary" is not to be construed as preferred or advantageous over other embodiments or designs.

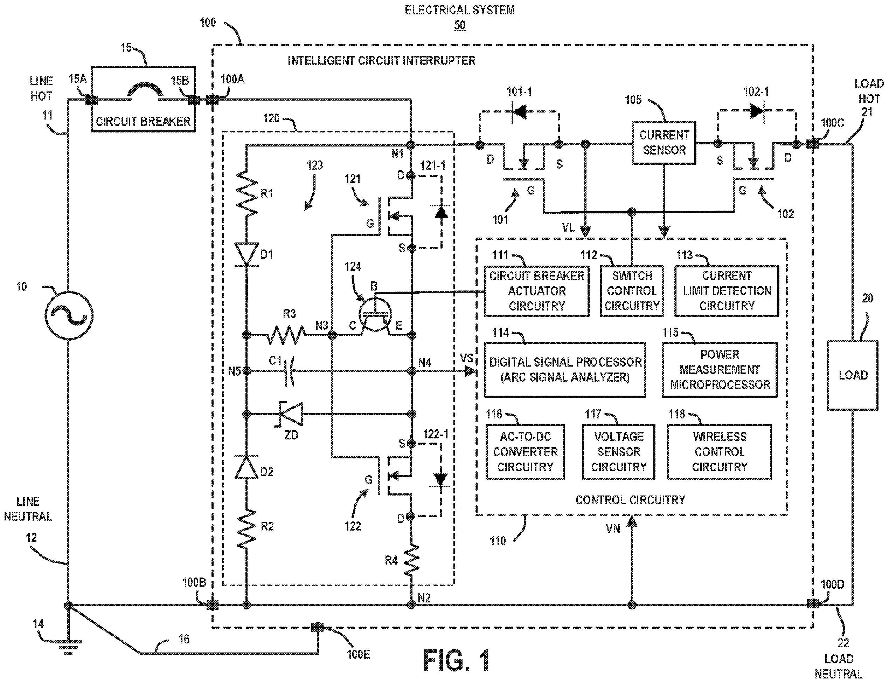

FIG. 1 schematically illustrates an electrical system comprising an intelligent circuit interrupter device according to an exemplary embodiment of the invention.

In particular, FIG. 1 schematically illustrates an electrical system 50 comprising a utility power supply 10 (referred to herein as AC mains 10), a circuit breaker 15, and a branch circuit comprising an intelligent circuit interrupter device 100 and a load 20. The AC mains 10 comprises a hot phase 11 (referred to as "line hot" 11) and a neutral phase 12 (referred to as "line neutral" 12). The circuit breaker 15 comprises a line input terminal 15A and a load output terminal 15B. The intelligent circuit interrupter device 100 comprises a line hot terminal 100A (or first input terminal), a line neutral terminal 100B (or second input terminal), a load hot terminal 100C (or first output terminal), a load neutral terminal 100D (or second output terminal), and an earth ground terminal 100E. The line input terminal 15A of the circuit breaker 15 is coupled to the line hot 11 of the AC mains 10, and the load output terminal 15B of the circuit breaker 15 is coupled to the line hot terminal 100A of the intelligent circuit interrupter device 100. The line neutral terminal 100B of the intelligent circuit interrupter device 100 is coupled to the line neutral 12 of the AC mains 10. The load hot terminal 100C of the intelligent circuit interrupter device 100 is coupled to a load hot line 21 of the load 20, and the load neutral terminal 100D of the intelligent circuit interrupter device 100 is coupled to a load neutral line 22 of the load 20.

In some embodiments such as shown in FIG. 1, the intelligent circuit interrupter device 100 is a device (e.g., first branch power receptacle) that is coupled to the branch circuit which is protected by the circuit breaker 15. In some embodiments, the intelligent circuit interrupter device 100 is a first device on the branch circuit downstream from the circuit breaker 15. In this regard, the load 20 is meant to generically represent (i) one or more electrical devices directly connected to the load side of the intelligent circuit interrupter device 100, (ii) one or more branch power receptacles (e.g., standard branch outlets) that are coupled to the load side of the intelligent circuit interrupter device 100, (iii) one or more electrical devices that are plugged into one or more of the branch power receptacles, or (iv) a combination of (i), (ii), and (iii).

As further illustrated in FIG. 1, the line neutral 12 of the AC mains 10 is bonded to earth ground 14 (GND). The earth ground 14 is typically connected to a ground bar in a circuit breaker distribution panel, wherein the ground bar is bonded to a neutral bar in the circuit breaker distribution panel. An earth ground connection 16 is made from the ground bar in the circuit breaker distribution panel to the earth ground terminal 100E of the intelligent circuit interrupter device 100. Similar ground connections are made from other receptacles or devices (e.g., the load 20) on the branch circuit to the ground bar in the circuit breaker distribution panel. The earth ground connection 16 provides an alternative low-resistance path for ground-fault return current to flow in the event of an occurrence of a ground-fault condition within the intelligent circuit interrupter device 100 or the load 20.

In some embodiments, the circuit breaker 15 is configured to "trip" in response to over-current and short-circuit fault conditions. As noted above, an over-current condition occurs when equipment is operated in excess of its normal, full-load rating, or a branch circuit in excess of its ampacity which, when the over-current condition persists for a sufficient period of time, would cause damage or dangerous over-heating. A short-circuit fault condition comprises an unintended or accidental load condition that produces a much higher current overload than an over-current condition, depending on the impedance of the fault. As noted above, a fault producing the maximum over-current condition is referred to as a short-circuit or a "bolted fault." In some embodiments, the circuit breaker 15 is not an AFCI protection device.

In some embodiments, the circuit breaker 15 comprises an electromechanical circuit breaker which comprises elements such as a mechanical AC switch (e.g., air-gap switch), a mechanical actuator mechanism, an electromagnetic actuator element (e.g., a solenoid), a thermal actuator element (e.g., bimetallic element), and a manual switch. In some embodiments, the mechanical air-gap switch comprises first and second contacts which are physically closed or separated by operation of the mechanical actuator mechanism (e.g., latch mechanism with spring element). In particular, the mechanical actuator mechanism is configured to physically close the first and second contacts together in response to manual actuation of the manual switch to an "On" position and thereby allow current to flow in an electrical path between the line input terminal 15A and load output terminal 15B of the circuit breaker 15. In addition, the mechanical actuator mechanism is configured to physically separate the first and second contacts of the mechanical AC switch (i.e., trip the circuit breaker 15) either manually in response to a manual actuation of the manual switch to an "Off" position, or automatically in response to the occurrence of short-circuit condition or prolonged over-current condition. When the circuit breaker 15 is manually or automatically tripped, an air-gap is created between the first and second contacts of the mechanical AC switch.

In particular, the electromagnetic actuator element (e.g., solenoid) is configured to be magnetically actuated in response to large surges in current generated by e.g., short-circuit events, wherein actuation of the electromagnetic element causes mechanical actuation of the actuator mechanism to separate the first and second contacts of the AC switch and thereby trip the circuit breaker 15. In addition, the thermal actuator element (e.g., bimetallic element) is configured to be thermally actuated in response to a prolonged excess over-current condition, wherein actuation of the thermal actuator element causes mechanical actuation of the actuator mechanism to separate the first and second contacts of the AC switch and thereby trip the circuit breaker 15. In this regard, the electromagnetic element of the circuit breaker 15 responds instantaneously to large surges in current (short-circuits) while the thermal actuator element responds to less extreme but longer-term over-current conditions. Once tripped, the circuit breaker 15 must be manually reset using the manual switch (e.g., toggle the manual switch to the "Off" position and then to the "On" position).

According to the invention, the intelligent circuit interrupter device 100 comprises a solid-state switch 101/102 which is serially connected in an electrical path between the line hot terminal 100A and the load hot terminal 100C, control circuitry 110, and internal short-circuit switch circuitry 120. The internal short-circuit switch circuitry 120 comprises an internal short-circuit switch 121/122 and a short-circuit current limiting resistor R4 (alternatively referred to herein as shunt resistor R4) serially connected between a first node N1 and a second node N2. The first node N1 is coupled to the line hot terminal 100A, and the second node N2 is coupled to the line neutral terminal 100B. The control circuitry 110 is coupled to the solid-state switch 101/102 and to the internal short-circuit switch circuitry 120. As explained in further detail below, the control circuitry 110 is configured to (i) detect for an occurrence of a fault condition, (ii) drive the solid-state switch 101/102 into a switched-off state in response to detecting the occurrence of a fault condition, and (iii) activate the internal short-circuit switch 121/122 in response to detecting the occurrence of a fault condition to thereby generate an internal short-circuit path between the first node N1 and the second node N2 and allow short-circuit current to flow through the shunt resistor R4 between the line hot terminal 100A and the line neutral terminal 100B of the circuit interrupter device 100 to thereby cause the circuit breaker 15 to trip and disconnect the AC mains 10 from the branch circuit.

The solid-state switch 101/102 comprises a first switch 101 and a second switch 102 which form a bidirectional solid-state switch. In some embodiments, a current sensor 105 is serially connected between the first and second switches 101 and 102. In some embodiments, the first and second switches 101 and 102 each comprise a metal-oxide-semiconductor field-effect transistor (MOSFET) switch (e.g., power MOSFET switches). In some embodiments, the first and second switches 101 and 102 comprise N-type enhancement MOSFET devices. The first and second switches 101 and 102 are serially connected back-to-back, and have source (S) terminals that are coupled through the current sensor 105, and commonly connected gate (G) terminals which are connected to the control circuitry 110. The first switch 101 comprises a drain terminal which is coupled to the line hot terminal 100A, and the second switch 102 comprises a drain terminal which is coupled to the load hot terminal 100C.

As further shown in FIG. 1, the first and second MOSFET switches 101 and 102 comprise intrinsic body diodes 101-1 and 102-1, respectively, where each body diode represents a P-N junction between a P-type substrate body to an N-doped drain region of the MOSFET switch. The body diodes 101-1 and 102-1 are intrinsic elements of the MOSFET switches 101 and 102 (i.e., not discrete elements) and, thus, are shown with dashed-line connections. It is to be noted that the intrinsic body-to-source diodes of the MOSFET switches 101 and 102 are not shown as they are shorted out by the connections between the source regions and the substrate bodies (e.g., N+ source and P-doped body junction are shorted through source metallization).

The solid-state switch 101/102 is configured to (i) allow the bidirectional flow of load current between the line hot terminal 100A and the load hot terminal 100C of the intelligent circuit interrupter device 100 when the solid-state switch 101/102 is in switched-on state and (ii) block the bidirectional flow of load current between the line hot terminal 100A and the load hot terminal 100C of the intelligent circuit interrupter device 100 when the solid-state switch 101/102 is in switched-off state.

The control circuitry 110 comprises the current sensor 105 and one or more integrated circuits blocks which implement circuit breaker actuator circuitry 111, switch control circuitry 112, current limit detection circuitry 113, a digital signal processor 114, a power measurement microprocessor 115, AC-to-DC converter circuitry 116, voltage sensor circuitry 117, and wireless control circuitry 118, the functions of which will be explained in further detail below. As noted above, the internal short-circuit switch circuitry 120 comprises the internal short-circuit switch 121/122 and the shunt resistor R4 serially connected between the first node N1 and the second node N2. As further shown in FIG. 1, the internal short-circuit switch circuitry 120 comprises switch biasing circuitry 123 (alternatively referred to herein as a self-biasing circuit 123), and an actuation switch 124. The switch biasing circuitry 123 comprises first and second resistors R1 and R2, first and second diodes D1 and D2, a third resistor R3, a capacitor C1, and a Zener diode ZD.

According to the invention, the internal short-circuit switch 121/122 comprises a bidirectional solid-state switch comprising a first MOSFET switch 121 and a second MOSFET switch 122, which comprise intrinsic body diodes 121-1 and 122-1, respectively. The first and second MOSFET switches 121 and 122 comprise gate (G) terminals that are commonly coupled to a third node N3, and source (S) terminals that are commonly coupled to a fourth node N4, wherein the fourth node N4 comprises a virtual ground node of the internal short-circuit switch circuitry 120.

The gate (G) terminals of the first and second MOSFET switches 121 and 122 are connected to the switch biasing circuitry 123 through the third node N3. The first MOSFET switch 121 comprises a drain (D) terminal that is coupled to the first node N1, and the second MOSFET switch 122 comprises a drain (D) terminal that is coupled to the second node N2 through the shunt resistor R4. In some embodiments such as shown in FIG. 1, the shunt resistor R4 is connected between the drain terminal of the second MOSFET switch 122 and the second node N2. In other embodiments, the shunt resistor R4 can be connected between the drain terminal of the first MOSFET switch 121 and the first node N1.

As further shown in FIG. 1, the actuation switch 124 is coupled between the third node N3 and the fourth node N4. The first and second MOSFET switches 121 and 122 essentially operate as an internal short-circuit switch that is activated/deactivated by operation of the actuation switch 124. In some embodiments, the actuation switch 124 comprises a bipolar junction transistor (BJT) (e.g., NPN BJT) or an Insulated Gate Bipolar Transistor (IGBT), which has a base (B) terminal coupled to the circuit breaker actuator circuitry 111, an emitter (E) terminal coupled to the commonly connected source (S) terminals of the first and second MOSFET switches 121 and 122 (at the fourth node N4), and a collector (C) terminal connected to the commonly connected gate (G) terminals of the first and second MOSFET switches 121 and 122 (at the third node N3).

Moreover, the switch biasing circuitry 123 comprises a self-biasing circuit that is configured to generate a regulated direct current (DC) voltage using current drawn from an AC power source applied to the line hot and line neutral terminals 100A and 100B of the circuit interrupter device 100, and to apply the regulated DC voltage to the gate terminals of the first and second MOSFET switches 121 and 122 of the internal short-circuit switch through the resistor R3. The self-biasing circuit comprises a voltage clamping circuit that is configured to generate the regulated DC voltage, wherein the voltage clamping circuit comprises the capacitor C1 and the Zener diode ZD, which are connected in parallel between a fifth node N5 and the fourth node N4. In addition, the self-biasing circuit comprises the first resistor R1 and the first diode D1 serially connected between the first node N1 and the fifth node N5, and the second resistor R2 and the second diode D2 serially connected between the second node N2 and the fifth node N5. The operation of the internal short-circuit switch circuitry 120 will be discussed in further detail below.

In some embodiments, the control circuitry 110 controls the activation and deactivation of the bidirectional solid-state switch 101/102 by operation of the switch control circuitry 112. In some embodiments, the switch control circuitry 112 is configured to generate a gate control signal that is applied to the gate terminals of the first and second MOSFET switches 101 and 102 to place the bidirectional solid-state switch 101/102 into a switched-on state or a switched-off state. In particular, during normal operation of the intelligent circuit interrupter device 100, the switch control circuitry 112 applies a gate control signal to the gate terminals of the first and second MOSFET switches 101 and 102 to place the bidirectional solid-state switch 101/102 in a switched-on state, which allows the bidirectional flow of AC load current between the line hot terminal 100A and the load hot terminal 100C of the intelligent circuit interrupter device 100.

On the other hand, when a given circuit block of the control circuitry 110 detects an occurrence of a fault condition or abnormal operating condition (e.g., series arcing, parallel arcing, short-circuit condition, over-current condition, ground-fault condition, abnormal load power profile, etc.), the control circuitry 110 will generate a fault detection control signal. In response to the fault detection control signal, the switch control circuitry 112 applies a gate control signal to the gate terminals of the first and second MOSFET switches 101 and 102 to place the bidirectional solid-state switch 101/102 into a switched-off state to thereby interrupt (i.e., block) the bidirectional flow of AC load current between the line hot terminal 100A and the load hot terminal 100C of the intelligent circuit interrupter device 100 and, thus, interrupt the flow of load current to the load 20.

The control circuitry 110 is configured to monitor voltages (e.g., VL, VN, etc.) at various nodes within the intelligent circuit interrupter device 100, as well as monitor load current which flows in the electrical path through the intelligent circuit interrupter device 100 between the line hot terminal 100A and the load hot terminal 100C, and utilize the monitored current and voltages to perform functions such as measuring power usage and profiles of the load, detecting fault conditions, etc. For example, the load current sensor 105 is configured to sense the flow of load current in the hot line path between the line hot terminal 100A and the load hot terminal 100C of the intelligent circuit interrupter device 100. The load current sensor 105 can be implemented using any suitable type of current sensing element including, but not limited to, a current-sensing resistor, a current amplifier, a Hall Effect current sensor, etc.

The output of the load current sensor 105 is input to various circuit blocks of the control circuitry 110 to detect for the occurrence of fault conditions and to detect for abnormal power profiles of the load 20 based, at least in part on, the magnitude and/or the AC waveform characteristics of the detected load current. The output of the current sensor 105 will vary depending on the type of current sensor 105 that is implemented. For example, in some embodiments, the output of the current sensor 105 can be a voltage which is generated across a sense resistor as a result of load current flowing through the sense resistor. In some embodiments, the output for the current sensor 105 can be a fault detection signal which is generated in response to the current sensor 105 detecting an over-current condition, etc. In other embodiments, a second current sensor can be implemented to sense the flow of load current in a neutral line path between the line neutral terminal 100B and the load neutral terminal 100D of the intelligent circuit interrupter device 100.

The voltage sensor circuitry 117 is configured to sense the voltage level at different nodes within the intelligent circuit interrupter device 100. For example, in the exemplary embodiment of FIG. 1, the voltage sensor circuitry 117 is configured to sense a hot line voltage VL at a point along the electrical path between the line hot terminal 100A and the load hot terminal 100C of the intelligent circuit interrupter device 100. In addition, the voltage sensor circuitry 117 is configured to sense a neutral line voltage VN at a point along the electrical path between the line neutral terminal 100B and the load neutral terminal 100D of the intelligent circuit interrupter device 100.

The voltage sensor circuitry 117 can be implemented using any suitable type of voltage sensing circuitry including, but not limited to, zero-crossing detector circuits. A zero-crossing detector is configured to receive as input an AC waveform, compare the input AC waveform to a zero-reference voltage (e.g., line neutral voltage), and detect the AC waveform transition from positive and negative, which coincides when the AC waveform crosses the zero-reference voltage. In some embodiments, the zero-crossing detector circuitry is configured to generate a square wave output which transitions between a logic "1" and logic "0" output upon each zero-crossing detection of the AC voltage waveform. In other embodiments, the zero-crossing detector circuitry is configured to generate a short-lived pulse (~3us) having an RC-adjustable duration. In some embodiments, the voltage sensor circuitry 117 comprises voltage divider circuitry which is configured to divide the sensed voltages VL, VN, etc., down to a lower voltage level and output voltages which are a fraction of the voltage levels of the input voltages VL, VN, etc., wherein the lower voltage levels are input to various circuit blocks (e.g., the digital signal processor 114, the power measurement microprocessor 115, etc.) of the control circuitry 110 to perform fault detection and power measurement functions.

The current limit detection circuitry 113 is configured to detect fault conditions such as over-current and short-circuit conditions based on the magnitude (e.g., RMS value, peak current, etc.) of the AC current waveform that is detected by the current sensor 105. For example, in some embodiments, the current sensor 105 comprises a sense resistor that generates a "sense voltage" based on an amount of load current flowing through the sense resistor, and the current limit detection circuitry 113 is configured to measure the sense voltage and determine if the sense voltage exceeds a pre-determined value which is indicative of a short-circuit fault condition. In response to detecting a fault condition, the current limit detection circuitry 113 outputs a fault detection control signal to the switch control circuitry 112, which causes the switch control circuitry 112 to deactivate the first and second MOSFET switches 101 and 102.

The power measurement microprocessor 115 is configured to utilize the sensed current and voltages (e.g., outputs of the current sensor 105 and voltage sensor circuitry 117) to determine the amount of power delivered to the load 20. In some embodiments, the power measurement microprocessor 115 comprises an application-specific integrated circuit (ASIC) which is specifically designed to measure power and energy in a power line system and process instantaneous voltage and current waveforms to compute RMS values of voltage and currents, active, reactive and apparent power and energies. In other embodiments, the power measurement microprocessor 115 comprises an "off-the-shelf" application-specific standard product (ASSP) chip that implements the desired power measurement functionalities.

In some embodiments, the power measurement microprocessor 115 is configured to measure power usage of the load 20 and maintain such power usage information over time for historical analysis. In some embodiments, the power measurement microprocessor 115 is configured to detect for abnormal load power usage or abnormal power profiles. For example, the power measurement microprocessor 115 can be configured to detect power profiles that are indicative of high resistance connections (known as glowing connections) which can cause fires, and other abnormal power profiles associated with, e.g., high line voltages or low line voltages, etc. In response to detecting the existence of an abnormal load power usage or abnormal power profiles, the power measurement microprocessor 115 can be configured to output a fault detection control signal to the switch control circuitry 112, which causes the switch control circuitry 112 to deactivate the first and second MOSFET switches 101 and 102.

In some embodiments, the digital signal processor 114 is configured to detect for the occurrence of arc-fault conditions. More specifically, in some embodiments, the digital signal processor 114 is configured as an arc signal analyzer which digitally samples the sensed voltage waveforms and/or sensed current waveforms to identify certain characteristics in the sampled voltage and current waveforms which are indicative of arcing waveforms. For instance, the digital signal processor 114 can be configured to sample the sensed voltage and/or current waveforms in small increments (e.g., microseconds) and compare the characteristics of the sampled waveforms to known characteristics of arcing waveforms to determine if an arcing condition exists, wherein certain abnormal characteristics in the amplitude or time period of the sampled waveforms are indicative of arcing conditions. In particular, decreased voltage, decreased current, changes in expected zero-voltage crossing timing, loss of zero-voltage crossing, etc., are conditions that can be indicative of arcing conditions. In some embodiments, if multiple features indicative of an arcing condition exist in two or more cycles of the AC mains 10, the digital signal processor 114 can determine that an arcing condition exists.

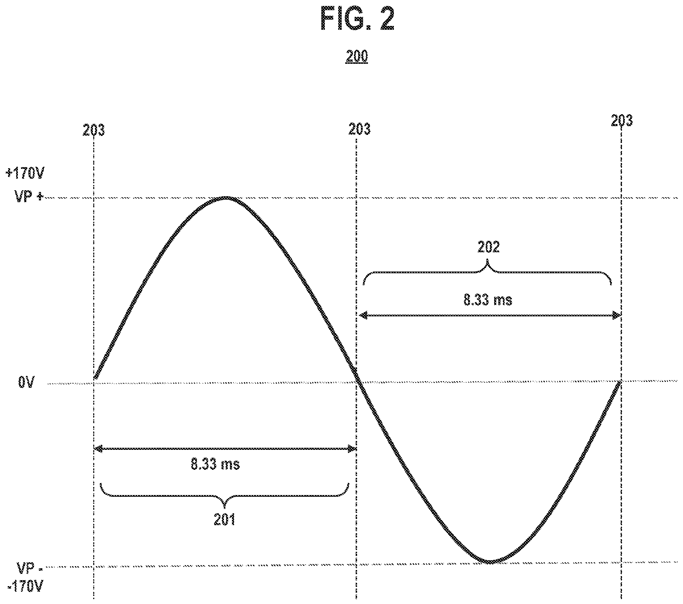

For example, FIG. 2 schematically illustrates an exemplary AC voltage waveform 200 of utility supply power that can be provided by the AC mains 10. In particular, FIG. 2 schematically illustrates an exemplary AC waveform 200 of utility supply power under normal operating conditions without arc-fault conditions The AC waveform 200 comprises a sine wave with respective positive and negative half-cycles 201 and 202. The AC waveform 200 has a positive peak voltage VP+ in the positive half-cycle 201, and a negative peak voltage VP- in the negative half-cycle 202, and voltage zero-crossings (0V) 203. For example, for utility power of 120 Vrms, the positive peak voltage VP+ is about 170V and the negative peak voltage VP- is about -170V. The exemplary AC waveform 200 is illustratively a 60 Hz signal with a period of about 16.66 milliseconds, wherein each half-cycle 201 and 202 has a duration of about 8.33 milliseconds.

When an arc-fault occurs, the exemplary AC voltage waveform 200 in FIG. 2 can be distorted in various ways. For example, the distorted AC voltage waveform 200 can have highfrequency AC components (e.g., 100 kHz or more) that cause voltage rippling of the AC voltage waveform. The distorted AC waveform 200 can have decreased peak voltages, whereby the AC waveform does not reach the expected peak voltages VP+ and VP-. Further, the distorted AC voltage waveform can have abnormal zero-voltage crossings which do not occur at the expected times of the zero-voltage crossings 203 shown in FIG. 2. In addition, the distorted AC voltage waveform can have significant asymmetry in the waveform profiles in the positive and negative half cycles 201 and 202, which significantly deviates from the symmetric profiles of a normal AC voltage waveform such as shown in FIG. 2.

In some embodiments, the digital signal processor 114 can digitally sample a sensed AC voltage waveform every microsecond, which provides 1000 samples per each millisecond of the sampled AC waveform. For an exemplary AC voltage waveform 200 as shown in FIG. 2 with a period of 16.67 milliseconds (60 Hz signal), the digital sampling of the AC voltage waveform (and associated current waveform) once every microsecond or several microseconds can provide a significant amount of information to analyze various characteristics of the AC voltage waveform to determine the existence of an arcing condition.

In response to detecting the existence of an arcing condition, the digital signal processor 114 will output a fault detection control signal to the switch control circuitry 112, which causes the switch control circuitry 112 to deactivate the first and second MOSFET switches 101 and 102. In addition, as explained in further detail below, in response to detecting an arcing condition, the digital signal processor 114 will output the fault detection control signal to the circuit breaker actuator circuitry 111, which causes the circuit breaker actuator circuitry 111 to activate an internal short-circuit switch (e.g., the bidirectional solid-state switch 121/122) within the internal short-circuit switch circuitry 120. The activation of the internal short-circuit switch causes an internal short-circuit path to be created between the line hot terminal 100A and the line neutral terminal 100B of the intelligent circuit interrupter device 100 with a controlled amount of short-circuit current flowing through the shunt resistor R4 that is serially coupled between the line hot terminal 100A and the line neutral terminal 100B. The flow of the internal short-circuit current within the intelligent circuit interrupter device 100 causes the circuit breaker 15 to trip and disconnect AC power from the branch circuit.

The AC-to-DC converter circuitry 116 is configured to provide DC supply power to the circuit blocks 111, 112, 113, 114, 115, 117, and 118 of the intelligent circuit interrupter device 100. In some embodiments, the AC-to-DC converter circuitry 116 is connected between the hot line (e.g., VL) and the neutral line (e.g., VN) and is configured to convert the AC power delivered by the AC mains 10 to a regulated DC supply voltage that is used to power the various circuit blocks of the control circuitry 110. In some embodiments, the AC-to-DC converter circuitry 116 comprises sufficient storage capacitance to power the control circuitry 110 immediately following a utility outage such that relevant power outage or short-circuit information may be obtained and stored as the utility power collapses, and then wirelessly transmitted to a remote node, device, or system using the wireless control circuitry 118. The AC-to-DC converter circuitry 116 may also include sufficient capacitance to maintain sufficient DC power the control circuitry 110 during a load short-circuit event, to thereby allow the control circuitry 110 to properly operate and deactivate the bidirectional solid-state switch 101/102 and interrupt power to the load 20.

In some embodiments, the wireless control circuitry 118 comprises a radio frequency (RF) transceiver to wirelessly communicate with a remote node, device, system, etc., to support remote monitoring of energy utilization and detection of fault conditions. In addition, the wireless control circuitry 118 is configured to enable wireless communication with the intelligent circuit interrupter device 100 to allow a technician, electrician, or a remote compute node, for example, to remotely control the intelligent circuit interrupter device 100 using predetermined commands. The wireless control circuitry 118 can implement any suitable wireless communication protocol such as Wi-Fi or WiMAX, Bluetooth, etc.

As noted above, the internal short-circuit switch circuitry 120 is configured to generate an internal short-circuit path between the line hot terminal 100A and the line neutral terminal 100B of the intelligent circuit interrupter device 100 in response to the detection of a fault condition such as an short-circuit condition, arc-fault condition, etc. When a fault condition is detected by a given circuit block of the control circuitry 110, the switch control circuitry 112 places the bidirectional solid-state switch 101/102 into a switched-off state, and the circuit breaker actuator circuitry 111 activates the internal short-circuit switch circuitry 120 to generate a controlled short-circuit current within the intelligent circuit interrupter 100 to thereby cause the circuit breaker 15 to trip. The internal short-circuit switch circuitry 120 is configured to generate a limited/controlled internal short-circuit current which flows between the line hot terminal 100A and the line neutral terminal 100B of the intelligent circuit interrupter device 100 through the shunt resistor R4 to effectively trip and shut off the circuit breaker 15.

While the bidirectional solid-state switch 101/102 of the intelligent circuit interrupter device 100 can be deactivated in response to the detection of an arc-fault condition to prevent current flow to the load 20, the deactivation of the bidirectional solid-state switch 101/102 will not protect against an arc-fault condition which occurs on the line side or otherwise upstream of the bidirectional solid-state switch 101/102 of the intelligent circuit interrupter device 100, and such upstream arc-fault condition may persist when the circuit breaker 15 does not implement arc-fault circuit interrupter functionality. In this regard, it is to be appreciated that the implementation of the internal short-circuit switch circuitry 120 within the intelligent circuit interrupter device 100 advantageously provides a cost-effective solution to provide AFCI protection for the entire branch circuit connected to the circuit breaker 15, despite the circuit breaker 15 not having AFCI functionality.

As shown in FIG. 1, the internal short-circuit switch circuitry 120 comprises a short-circuit path between the internal first node N1 (which is coupled to the line hot terminal 100A) and the internal second node N2 (which is coupled to the line neutral terminal 100B). The short-circuit path between the internal nodes N1 and N2 is generated when the bidirectional solid-state switch 121/122 is activated to cause a controlled short-circuit current to flow through the shunt resistor R4 between the internal nodes N1 and N2. The first and second MOSFET switches 121 and 122 essentially operate as an internal short-circuit switch that is activated/deactivated by operation of the actuation switch 124.

As noted above, the switch biasing circuitry 123 comprises a self-biasing circuit which is configured to generate a regulated DC voltage on node N5, which is used to drive the gate (G) terminals of the first and second switches 121 and 122 and turn on the first and second switches, when the actuation switch 124 is turned-off. When the actuation switch 124 is turned on, the gate (G) and source (S) terminals of the first and second switches 121 and 122 are effectively shunted/shorted (e.g., V_{GS} is approximately 0V), which results in maintaining the first and second switches 121 and 122 of the bidirectional solid-state switch 121/122 in a switched-off state. On the other hand, when the actuation switch 124 is turned-off, the self-generated, regulated DC voltage at node N5 is applied to the commonly connected gate (G) terminals of the first and second switches 121 and 122, which causes the first and second switches 121 and 122 to turn on and thereby generate an internal short-circuit path between the internal first and second nodes N1 and N2, i.e., between the line hot terminal 100A and the line neutral terminal 100B of the intelligent circuit interrupter device 100. When the internal short-circuit path is generated, the shunt resistor R4 will control the magnitude of the internal short-circuit current which flows between the line hot terminal 100A and the line neutral terminal 100B to trip the circuit breaker 15.

The operation (activation/deactivation) of the actuation switch 124 is controlled by the circuit breaker actuation circuitry 111, wherein the circuit breaker actuation circuitry 111 generates and outputs a control voltage to the base (B) terminal of the actuation switch 124 to activate or deactivate the actuation switch 124. During normal operation of the intelligent circuit interrupter device 100, the circuit breaker actuation circuitry 111 outputs a control voltage to the base (B) terminal of the actuation switch 124 to maintain the actuation switch 124 in a turned-on state, to maintain the first and second switches 121 and 122 in a turned-off state. When the control circuitry 110 detects a fault condition (e.g., an arc-fault condition detected by the digital signal processor 114), a fault detection control signal is generated and applied to the switch control circuitry 112 and the circuit breaker actuator circuitry 111. In response to the fault detection control signal, the circuit breaker actuator circuitry 111 generates and outputs a control voltage to the base (B) terminal of the actuation switch 124 to deactivate (turn-off) the actuation switch 124. The deactivation of the actuation switch 124 results in the activation of the internal short-circuit switch (i.e., activation of the first and second switches 121 and 122), which causes an internal short-circuit path to be created between the line hot terminal 100A and the line neutral terminal 100B (between nodes N1 and N2) of the intelligent circuit interrupter device 100 with short-circuit current flowing through the shunt resistor R4 that is serially coupled between the line hot terminal 100A and the line neutral terminal 100B.

More specifically, in some embodiments, the internal short-circuit switch circuitry 120 operates as follows. During power-up of the intelligent circuit interrupter device 100 (i.e., when AC mains 10 power is applied across the line hot terminal 100A and the line neutral terminal 100B of the intelligent circuit interrupter device 100) and normal operation, the circuit breaker actuation circuitry 111 generates and outputs a control voltage to the base terminal of the actuation switch 124 to place the actuation switch 124 in a turned-on state. When the actuation switch 124 is in the turned-on state, the gate (G) and source (S) terminals of the first and second switches 121 and 122 are effectively shunted/shorted, which results in maintaining the first and second switches 121 and 122 of the internal short-circuit switch in a switched-off state. As such, no short-circuit current flows in the path between the interna nodes N1 and N2.

The fourth node N4 serves as a virtual ground node of the internal short-circuit switch circuitry 120, wherein the voltage VS (e.g., virtual ground voltage) on the node N4 is utilized as a ground reference by the control circuitry 110 (e.g., the circuit breaker actuator circuitry 111) to drive the base (B) terminal of the actuation switch 124. More specifically, during normal operation of the intelligent circuit interrupter device 100, the control circuitry 110 will apply a drive voltage the base (B) terminal of the actuator switch 124 such that a base-to-emitter (V_{BE}) voltage will be at least equal to or greater than the threshold voltage (e.g., 0.7V) of the actuator switch 124. The drive voltage (V_{BE}) that is applied to the base (B) terminal of the actuator switch 124 is generated with reference to the voltage VS of the virtual node N4. When the actuator switch 124 is to be deactivated, the control circuitry 110 will essentially apply the virtual ground voltage VS to the base (B) terminal of the actuator switch 124 (e.g., couple the virtual ground node N4 to the base (B) terminal of the actuator switch 124), which causes the actuation switch 124 to be turned off.

Furthermore, during power-up of the intelligent circuit interrupter device 100, the switch biasing circuitry 123 operates to charge the capacitor C1 to a maximum voltage which is clamped by the reverse breakdown voltage (referred to as "Zener voltage") of the Zener diode ZD. In some embodiments, the Zener voltage is in a range of about 10V to about 15V. In particular, during a positive half-cycle of the AC mains 10, current flows along the path through the first resistor R1, the first diode D1, the capacitor C1, the intrinsic body diode 122-1 of the second switch 122, and the shunt resistor R4, to charge the capacitor C1. During a negative half-cycle of the AC mains 10, current flows along the path through the second resistor R2, the second diode D2, the capacitor C1, and the intrinsic body diode 121-1 of the first switch 121 to charge the capacitor C1. Accordingly, during the initial power-up phase of the intelligent circuit interrupter device 100, one or more cycles of the AC mains 10 causes the capacitor C1 to be charged to the Zener voltage of the Zener diode ZD, which is greater than the threshold voltage, V_{T}, of the first and second switches 121 and 122.

During operation of the intelligent circuit interrupter device 100, a given circuit block of the control circuitry 110 may detect a fault condition such as short-circuit condition, an over-current condition, an arc-fault condition, etc., as a result of analyzing sensor data obtained from, e.g., the current sensor 105 and/or the voltage sensor circuitry 117. For instance, the digital signal processor 114 may detect the occurrence of an arcing waveform that exists either internally within the intelligent circuit interrupter device 100 or external (line side or load side) to the intelligent circuit interrupter device 100. In response, the control circuitry 110 generates a fault detection signal which triggers the circuit breaker actuator circuitry 111 to generate a control signal to deactivate the actuation switch 124 of the internal short-circuit switch circuitry 120. The deactivation of the actuation switch 124 results in the activation of the internal short-circuit switch (i.e., activation of the first and second switches 121 and 122), which in turn generates an internal short-circuit path between the nodes N1 and N2, which results in a shunt connection between the line hot terminal 100A and the line neutral terminal 100B of the intelligent circuit interrupter device 100. The internal short-circuit path which is generated within the intelligent circuit interrupter device 100 causes over-current to flow through the circuit breaker 15 and thereby trip the circuit breaker 15 and create an air-gap in the electrical path between the line hot 11 of the AC mains 10 and line hot terminal 100A of the intelligent circuit interrupter device 100. The air-gap serves to electrically isolate the line hot 11 of the AC mains 10 from the load 20.

The magnitude of the internal short-circuit current which flows in the internal short-circuit path generated by operation of the internal short-circuit switch circuitry 120 is limited by the resistance value of the shunt resistor R4. In some embodiments, the resistance of the shunt resistor R4 is selected so that a magnitude of the internal short-circuit current which flows in the short-circuit path between the nodes N1 and N2 within the intelligent circuit interrupter device 100 is in range of about 2X to about 3X the current rating of the circuit breaker 15. For example, if the circuit breaker 15 has a current rating of 20 amperes, the resistance of the shunt resistor R4 is selected so that a maximum of approximately 40 to 60 amperes of current flows through the circuit breaker 15 and through the short-circuit path between the nodes N1 and N2 within the intelligent circuit interrupter device 100, to thereby cause the circuit breaker 15 to trip. In this regard, the magnitude of the short-circuit current which flows through the circuit breaker 15 is limited by the magnitude of the internal short-circuit current that is generated in the short-circuit path between the nodes N1 and N2 based on the resistance value of the shunt resistor R4. In this instance, the amount of short-circuit current that is generated to trip the circuit breaker 15 is controlled/limited by the shunt resistor R4, which further limits the amount of electrical arcing that is generated between the contacts of the air-gap switch of the circuit breaker 15 when the circuit breaker 15 is tripped.

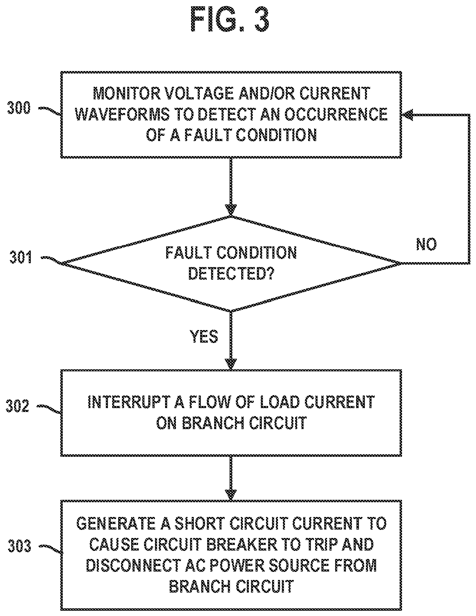

FIG. 3 is a flow diagram of a method for providing circuit interruption, according to an exemplary embodiment.

More specifically, FIG. 3 illustrates a high-level mode of operation of the intelligent circuit interrupter device 100 of FIG. 1, according to an exemplary embodiment of the disclosure. The method comprises monitoring a voltage waveform and/or a current waveform to detect for the occurrence of a fault condition on a branch circuit that is protected by a circuit breaker (block 300). For example, as noted above, the control circuitry 110 of the intelligent circuit interrupter device 100 is configured to monitor and sense voltage waveforms and load current waveforms, e.g., at points along (i) the electrical path between the line hot terminal 100A and the load hot terminal 100C, and/or (ii) the electrical path between the line neutral terminal 100B and the load neutral terminal 100D. When the intelligent circuit interrupter device 100 detects an occurrence of a fault condition on the branch circuit (affirmative determination in block 301), the intelligent circuit interrupter device 100 will interrupt a flow of load current on the branch circuit (block 302) and generate an internal short-circuit path within the intelligent circuit interrupter device 100 to allow a short-circuit current to flow through a shunt resistor within the intelligent circuit interrupter device 100, wherein the flow of the short-circuit current within the intelligent circuit interrupter device causes the circuit breaker to trip and disconnect an AC power source from the branch circuit (block 303).

In the exemplary embodiment of FIG. 1, the intelligent circuit interrupter device 100 comprises a single-pole single-throw (SPST) switch configuration wherein the first and second MOSFET switches 101 and 102 of the bidirectional solid-state switch are serially connected back-to-back in the electrical path between the line hot terminal 100A and the load hot terminal 100C. In other embodiments, an intelligent circuit interrupter device comprises a double-pole single-throw (DPST) switch configuration, wherein the first MOSFET switch 101 is connected in the electrical path between the line hot terminal 100A and the load hot terminal 100C, and the second MOSFET switch 102 is connected in the electrical path between the line neutral terminal 100B and the load neutral terminal 100D. In the DPST configuration, the drain (D) terminal of the second MOSFET switch 102 would be coupled to the line neutral terminal 100B, while the source (S) terminal of the second MOSFET switch 102 would be coupled to the load neutral terminal 100D. In the DPST switch configuration, the gate (G) terminals of the first and second MOSFET switches 101 and 102 would be concurrently controlled by the control circuitry 110 (e.g., the switch control circuitry 112) as in the SPST switch configuration of FIG. 1 as discussed above, whereby deactivation of the first and second MOSFET switches 101 and 102 would effectively disconnect the line hot terminal 100A and the load hot terminal 100C, as well as effectively disconnect the line neutral terminal 100B and the load neutral terminal 100D.

It is to be understood that intelligent circuit interrupter devices according to exemplary embodiments of the invention can be embodied in various devices and applications. For example, in some embodiments, the intelligent circuit interrupter device 100 of FIG. 1 can be implemented or otherwise integrated in an electrical receptacle device (e.g., branch outlet), or in an electrical light switch (e.g., a wall-mounted light switch, or a light switch implemented in a smart light fixture or smart ceiling light bulb socket, etc.), or other types of devices which provide power to a load. In other embodiments, the intelligent circuit interrupter device 100 of FIG. 1 may comprise a standalone device which is disposed within a gang box in an electrical network of a home or building and configured to protect one or more electrical devices, appliances, loads, etc. that are connected in a branch circuit downstream of the standalone intelligent circuit interrupter device.

It is to be appreciated that the exemplary intelligent circuit interrupter devices and methods as disclosed herein provide various technical advantages. For example, the implementation of the bidirectional solid-state switch 101/102 allows the intelligent circuit interrupter device 100 to rapidly respond to imminent fault conditions such as arc-fault conditions, over-current fault conditions, load-side short-circuit fault conditions, internal fault conditions, ground-fault conditions, over-voltage conditions, etc., by rapid deactivation of the bidirectional solid-state switch 101/102. Indeed, the response time for deactivating the bidirectional solid-state switch 101/102 to isolate a fault condition can be on the order of 1000 times faster than the response time associated with the automatic tripping of an electromechanical AC switch of a conventional circuit breaker to isolate a fault condition such as a short-circuit or over-current condition (e.g., which is on the order of several milliseconds), as the solid-state state bidirectional switch 101/102 can transition from a switched-on state to a switched-off state on the order of microseconds or nanoseconds.

Moreover, as noted above, the implementation of the internal short-circuit switch circuitry 120 within the intelligent circuit interrupter device 100 advantageously provides a cost-effective solution to provide AFCI protection (and other protections such as ground fault circuit interrupter (GFCI) protection) for the entire branch circuit connected to the circuit breaker 15, despite the circuit breaker 15 not having AFCI functionality. For example, in an existing electrical distribution system which comprises conventional circuit breakers which provide no AFCI protection to branch circuits within a given home or building, an intelligent circuit interrupter device such as shown in FIG. 1 can be added as a first device (e.g., power receptacle having the integrated intelligent circuit interrupter device 100) in each branch circuit, to effectively provide AFCI protection without having to change the conventional circuit breakers to expensive AFCI circuit breakers.

Furthermore, the implementation of the internal short-circuit switch circuitry 120 within the intelligent circuit interrupter device 100, which is configured to generate a controlled short circuit current to trip a conventional circuit breaker having a mechanical AC air-gap switch, provides a mechanism to create an air-gap in the electrical path between the line hot 11 of the AC mains 10 and the load 20 to provide complete isolation of the AC mains 10 from the load 20 and prevent the flow of current from the line hot 11 to the load 20, as well as prevent the flow of leakage current that can be generated by the bidirectional solid-state switch 101/102 when the bidirectional solid-state switch 101/102 is in a switched-off state. This enables compliance with electrical codes which require the implementation of an air-gap in the electrical path between the AC mains and the branch circuit when a fault condition in the branch circuit occurs.

Although exemplary embodiments have been described herein with reference to the accompanying figures, it is to be understood that the current invention is not limited to those precise embodiments, and that various other changes and modifications may be made therein by one skilled in the art without departing from the scope of the appended claims.

## Claims

1. A circuit interrupter device (100), comprising:
a line hot terminal (100A), a line neutral terminal (100B), a load hot terminal (100C), and a load neutral terminal (100D);
a solid-state switch (101, 102) serially connected in an electrical path between the line hot terminal (100A), and the load hot terminal (100C);
internal short-circuit switch circuitry (120) comprising an internal short-circuit switch (121, 122) and a shunt resistor (R4) serially connected between a first node (N1) and a second node (N2), wherein the first node (N1) is coupled to the line hot terminal (100A) and the second node (N2) is coupled to the line neutral terminal (100B); a self-biasing circuit (123) that is configured to generate a regulated direct current, DC, voltage using current drawn from an alternating current (AC) power source (10) applied to the line hot terminal (100A) and the line neutral terminal (100B), and an actuation switch (124),
and
control circuitry (110) coupled to the solid-state switch (101, 102) and the internal short-circuit switch circuitry (120);
wherein the internal short-circuit switch (121, 122) comprises a bidirectional solid-state switch comprising a first metal-oxide-semiconductor field-effect transistor (MOSFET) switch (121) and a second MOSFET switch (122), the first and second MOSFET switches comprising gate terminals (G) which are commonly coupled to a third node (N3) to provide a control terminal of the internal short-circuit switch, and source terminals (S) which are commonly coupled to a fourth node (N4), wherein the first MOSFET switch (121) comprises a drain terminal (D) that is coupled to the first node (N1), wherein the second MOSFET switch (122) comprises a drain terminal (D) that is coupled to the second node (N2), wherein the fourth node (N4) comprises a virtual ground node of the internal short-circuit switch circuitry (120), and wherein the fourth node (N4) is connected to control circuitry (110);
wherein the control circuitry (110) is configured to detect for an occurrence of a fault condition;
wherein in response to detecting the occurrence of a fault condition, the control circuitry (110) is configured to:
drive the solid-state switch (101, 102) into a switched-off state; and
drive the actuation switch (124) from a switched-on state to a switched-off state to cause the regulated DC voltage to be applied to the control terminal of the internal short-circuit switch (121, 122) and thereby place the internal short-circuit switch (121, 122) in a switched-on state to generate an internal short-circuit path between the first node (N1) and the second node (N2).

2. The circuit interrupter device (100) of claim 1, wherein:
during normal operation of the circuit interrupter device (100), a voltage (VS) on the fourth node (N4) is utilized as a ground reference by the control circuitry (110) to generate a drive voltage (V_{BE}) that is applied to a control terminal (B) of the actuator switch (124) with reference to the voltage (VS) of the virtual node N4, to maintain the actuator switch (124) in the switched-on state; and
the actuator switch (124) is placed into the switched-off state by the control circuitry (110) coupling the virtual ground node (N4) to the control (B) terminal of the actuator switch (124) to cause the actuation switch (124) to turn off.

3. The circuit interrupter device (100) of claim 1, wherein the shunt resistor (R4) is connected between the drain terminal (D) of the second MOSFET switch (122) and the second node (N2).

4. The circuit interrupter device (100) of claim 1, wherein the self-biasing circuit (123) is configured to generate and maintain the regulated DC voltage also during periods when the actuation switch (124) is maintained in a switched-on state by the control circuitry 110 to maintain the internal short-circuit switch (121, 122) in a switched-off state.

5. The circuit interrupter device (100) of claim 4, wherein the self-biasing circuit (123) comprises a voltage clamping circuit that is configured to generate the regulated DC voltage, wherein the voltage clamping circuit comprises a capacitor (C1) and a Zener diode (ZD) connected in parallel between a fifth node (N5) and the fourth node (N4).

6. The circuit interrupter device (100) of claim 1, wherein the actuation switch (124) is coupled between the third node (N3) and the fourth node (N4) and comprises a control terminal coupled to the control circuitry (110).

7. The circuit interrupter device (100) of claim 1, wherein the control circuitry (110) is configured to drive the actuation switch (124) into one of (i) a switched-on state to thereby shunt the gate and source terminals of the first MOSFET switch (121) and the second MOSFET switch (122) and place the internal short-circuit switch (121, 122) in a switched-off state and (ii) a switched-off state to cause the regulated DC voltage to be applied to the gate (G) terminals of the first and second MOSFET switches to thereby place the internal short-circuit switch (121, 122) in a switched-on state.

8. The circuit interrupter device (100) of claim 1, wherein the shunt resistor (R4) comprises a resistance value which limits an amount of short-circuit current which flows between the line hot terminal (100A) and the line neutral terminal (100B) of the circuit interrupter device (100).

9. The circuit interrupter device (100) of claim 1, wherein the control circuitry (110) is configured to (i) sense a current waveform of a load current flowing in the electrical path between the line hot terminal and the load hot terminal and (ii) detect for an occurrence of a short-circuit fault condition based on the sensed current waveform.

10. The circuit interrupter device (100) of claim 1, wherein the control circuitry (110) is configured to (i) sense a voltage waveform on the electrical path between the line hot terminal and the load hot terminal and (ii) detect for an occurrence of an arc-fault condition based on the sensed voltage waveform.

11. A power receptable comprising the circuit interrupter device (100) of claim 1.

12. A system comprising:
a circuit breaker (15) comprising a line input terminal (15A) and a load output terminal (15B), wherein the line input terminal (15A) of the circuit breaker (15) is coupled to an alternating current (AC) power source (10); and
the circuit interrupter device (100) according to claim 1 coupled to the load output terminal (15B) of the circuit breaker (15),
wherein the flow of short-circuit current between the line hot terminal (100A) and the line neutral terminal (100B) of the circuit interrupter device (100) is sufficient to trip the circuit breaker (15).

13. The system of claim 12, wherein the circuit breaker (15) comprises an electromechanical circuit breaker comprising at least one of electromagnetic actuator element and a thermal actuator element.

14. The system of claim 12, wherein the shunt resistor (R4) comprises a resistance value which limits an amount of short-circuit current which flows between the line hot terminal (100A) and the line neutral terminal (100B) of the circuit interrupter device (100) to no more than about 3X a current rating of the circuit breaker (15).

15. The system of claim 12, wherein:
during normal operation of the circuit interrupter device (100), a voltage (VS) on the fourth node (N4) is utilized as a ground reference by the control circuitry (110) to generate a drive voltage (V_{BE}) that is applied to a control terminal (B) of the actuator switch (124) with reference to the voltage (VS) of the virtual node N4, to maintain the actuator switch (124) in the switched-on state; and
the actuator switch (124) is placed into the switched-off state by the control circuitry (110) coupling the virtual ground node (N4) to the control (B) terminal of the actuator switch (124) to cause the actuation switch (124) to turn off.

16. The system of claim 12, wherein:
the self-biasing circuit (123) is configured to generate and maintain the regulated DC voltage also during periods when the actuation switch (124) is maintained in a switched-on state by the control circuitry 110 to maintain the internal short-circuit switch (121, 122) in a switched-off state; and
the self-biasing circuit (123) comprises a voltage clamping circuit that is configured to generate the regulated DC voltage, wherein the voltage clamping circuit comprises a capacitor (C1) and a Zener diode (ZD) connected in parallel between a fifth node (N5) and the fourth node (N4).

17. The system of claim 12, wherein:
the actuation switch (124) is coupled between the third node (N3) and the fourth node (N4) and comprises a control terminal (B) coupled to the control circuitry (110); and
the control circuitry (110) is configured to drive the actuation switch (124) into one of (i) a switched-on state to thereby shunt the gate and source terminals of the first MOSFET switch (121) and the second MOSFET switch (122) and place the internal short-circuit switch (121, 122) in a switched-off state and (ii) a switched-off state to cause the regulated DC voltage to be applied to the gate (G) terminals of the first and second MOSFET switches to place the internal short-circuit switch (121, 122) in a switched-on state.

18. A method, comprising:
generating, by a circuit interrupter device (100), a regulated direct current (DC) voltage using current drawn from an alternating current (AC) power source (10) applied to a line hot terminal (100A) and a line neutral terminal (100B) of the circuit interrupter device (100);
detecting (300, 301), by a circuit interrupter device (100), an occurrence of a fault condition on a branch circuit that is protected by a circuit breaker (15); and
in response to detecting the occurrence of the fault condition:
interrupting (302), by the circuit interrupter device (100), a flow of load current on the branch circuit to a load connected to a load terminal of the circuit interrupter device (100); and
generating (303), by the circuit interrupter device (100), a short-circuit path to allow a short-circuit current to flow through a shunt resistor (R4) within the circuit interrupter device (100), wherein the flow of the short-circuit current within the circuit interrupter device (100) causes the circuit breaker (15) to trip and disconnect an alternating current (AC) power source from the branch circuit;
wherein generating the short-circuit path comprises driving an actuation switch (124) from a switched-on state to a switched-off state to cause the regulated DC voltage to be applied to a control terminal of an internal short-circuit switch (121, 122) to place the internal short-circuit switch (121, 122) in a switched-on state to thereby generate an internal short-circuit path between the line hot terminal (100A) and the line neutral terminal (100B) of the circuit interrupter device (100), and allow the short-circuit current to flow through the shunt resistor (R4) between the line hot terminal and the line neutral terminal of the circuit interrupter device (100) to cause the circuit breaker (15) to trip; and
wherein the internal short-circuit switch (121, 122) comprises a bidirectional solid-state switch comprising a first metal-oxide-semiconductor field-effect transistor (MOSFET) switch (121) and a second MOSFET switch (122), the first and second MOSFET switches comprising gate terminals (G) which are commonly coupled to a third node (N3) to provide the control terminal of the internal short-circuit switch, and source terminals (S) which are commonly coupled to a fourth node (N4), wherein the first MOSFET switch (121) comprises a drain terminal (D) that is coupled to the first node (N1), wherein the second MOSFET switch (122) comprises a drain terminal (D) that is coupled to the second node (N2), wherein the fourth node (N4) comprises a virtual ground node of the internal short-circuit switch circuitry (120), and wherein the fourth node (N4) is connected to control circuitry (110).

19. The method of claim 18, wherein the shunt resistor (R4) comprises a resistance value which limits a magnitude of the short-circuit current to no more than about 3X a current rating of the circuit breaker (15).

20. The method of claim 18, wherein the regulated DC voltage is generated and maintained during periods when the actuation switch (124) is maintained in a switched-on state to maintain the internal short-circuit switch (121, 122) in a switched-off state.

## Patentansprüche

1. Schaltungsunterbrechervorrichtung (100), umfassend:
einen netzseitigen Phasenanschluss (100A), einen netzseitigen Neutralleiteranschluss (100B), einen lastseitigen Phasenanschluss (100C) und einen lastseitigen Neutralleiteranschluss (100D);
einen Festkörperschalter (101, 102), der in einem elektrischen Pfad zwischen dem netzseitigen Phasenanschluss (100A) und dem lastseitigen Phasenanschluss (100C) in Reihe geschaltet ist;
eine interne Kurzschlussschalter-Schaltungsanordnung (120), umfassend einen internen Kurzschlussschalter (121, 122)
und einen Shunt-Widerstand (R4), die zwischen einem ersten Knoten (N1) und einem zweiten Knoten (N2) in Reihe geschaltet sind, wobei der erste Knoten (N1) mit dem netzseitigen Phasenanschluss (100A) gekoppelt ist und der zweite Knoten (N2) mit dem netzseitigen Neutralleiteranschluss (100B) gekoppelt ist; eine Selbstvorspannungsschaltung (123), die konfiguriert ist, um eine geregelte Gleichstromspannung (DC-Spannung) unter Verwendung von Strom zu erzeugen, der aus einer Wechselstromstromquelle (AC-Stromquelle) (10) bezogen wird, die an den netzseitigen Phasenanschluss (100A) und den netzseitigen Neutralleiteranschluss (100B) angelegt wird, und einen Betätigungsschalter (124),
und eine Steuerschaltungsanordnung (110), die mit dem Festkörperschalter (101, 102) und der internen Kurzschlussschalter-Schaltungsanordnung (120) gekoppelt ist;
wobei der interne Kurzschlussschalter (121, 122) einen bidirektionalen Festkörperschalter umfasst, umfassend einen ersten Metall-Oxid-Halbleiter-Feldeffekttransistor-Schalter (MOSFET-Schalter) (121) und einen zweiten MOSFET-Schalter (122), wobei der erste und der zweite MOSFET-Schalter Gate-Anschlüsse (G), die gemeinsam mit einem dritten Knoten (N3) gekoppelt sind, um einen Steueranschluss des internen Kurzschlussschalters bereitzustellen, und Source-Anschlüsse (S) umfassen, die gemeinsam mit einem vierten Knoten (N4) gekoppelt sind, wobei der erste MOSFET-Schalter (121) einen Drain-Anschluss (D) umfasst, der mit dem ersten Knoten (N1) gekoppelt ist, wobei der zweite MOSFET-Schalter (122) einen Drain-Anschluss (D) umfasst, der mit dem zweiten Knoten (N2) gekoppelt ist, wobei der vierte Knoten (N4) einen virtuellen Masseknoten der internen Kurzschlussschalter-Schaltungsanordnung (120) umfasst, und wobei der vierte Knoten (N4) mit der Steuerschaltungsanordnung (110) verbunden ist;
wobei die Steuerschaltungsanordnung (110) konfiguriert ist, um ein Auftreten einer Fehlerbedingung zu erkennen;
wobei die Steuerschaltungsanordnung (110) als Reaktion auf das Erkennen des Auftretens einer Fehlerbedingung konfiguriert ist zum:
Treiben des Festkörperschalters (101, 102) in einen ausgeschalteten Zustand; und
Treiben des Betätigungsschalters (124) von einem eingeschalteten Zustand in einen ausgeschalteten Zustand, um zu bewirken, dass die geregelte DC-Spannung an den Steueranschluss des internen Kurzschlussschalters (121, 122) angelegt wird, und dadurch den internen Kurzschlussschalter (121, 122) in einen eingeschalteten Zustand zu versetzen, um einen internen Kurzschlusspfad zwischen dem ersten Knoten (N1) und dem zweiten Knoten (N2) zu erzeugen.

2. Schaltungsunterbrechervorrichtung (100) nach Anspruch 1, wobei:
während des normalen Betriebs der Schaltungsunterbrechervorrichtung (100) eine Spannung (VS) an dem vierten Knoten (N4) als eine Massereferenz durch die Steuerschaltungsanordnung (110) genutzt wird, um eine Treiberspannung (V_{BE}) zu erzeugen, die an einen Steueranschluss (B) des Aktuatorschalters (124) in Bezug auf die Spannung (VS) des virtuellen Knotens N4 angelegt wird, um den Aktuatorschalter (124) in dem eingeschalteten Zustand zu halten; und
der Aktuatorschalter (124) in den ausgeschalteten Zustand versetzt wird, indem die Steuerschaltungsanordnung (110) den virtuellen Masseknoten (N4) mit dem Steueranschluss (B) des Aktuatorschalters (124) koppelt, um zu bewirken, dass sich der Betätigungsschalter (124) ausschaltet.

3. Schaltungsunterbrechervorrichtung (100) nach Anspruch 1, wobei der Shunt-Widerstand (R4) zwischen dem Drain-Anschluss (D) des zweiten MOSFET-Schalters (122) und dem zweiten Knoten (N2) verbunden ist.

4. Schaltungsunterbrechervorrichtung (100) nach Anspruch 1, wobei die Selbstvorspannungsschaltung (123) konfiguriert ist, um die geregelte DC-Spannung auch während Zeiträumen zu erzeugen und aufrechtzuerhalten, in denen der Betätigungsschalter (124) durch die Steuerschaltungsanordnung (110) in einem eingeschalteten Zustand gehalten wird, um den internen Kurzschlussschalter (121, 122) in einem ausgeschalteten Zustand zu halten.

5. Schaltungsunterbrechervorrichtung (100) nach Anspruch 4, wobei die Selbstvorspannungsschaltung (123) eine Spannungsklemmschaltung umfasst, die konfiguriert ist, um die geregelte DC-Spannung zu erzeugen, wobei die Spannungsklemmschaltung einen Kondensator (C1) und eine Zener-Diode (ZD) umfasst, die zwischen einem fünften Knoten (N5) und dem vierten Knoten (N4) parallel geschaltet sind.

6. Schaltungsunterbrechervorrichtung (100) nach Anspruch 1, wobei der Betätigungsschalter (124) zwischen dem dritten Knoten (N3) und dem vierten Knoten (N4) gekoppelt ist und einen Steueranschluss umfasst, der mit der Steuerschaltungsanordnung (110) gekoppelt ist.

7. Schaltungsunterbrechervorrichtung (100) nach Anspruch 1, wobei die Steuerschaltungsanordnung (110) konfiguriert ist, um den Betätigungsschalter (124) in einen von (i) einem eingeschalteten Zustand, um dadurch die Gate- und Source-Anschlüsse des ersten MOSFET-Schalters (121) und des zweiten MOSFET-Schalters (122) kurzzuschließen und den internen Kurzschlussschalter (121, 122) in einen ausgeschalteten Zustand zu versetzen, und (ii) einem ausgeschalteten Zustand zu treiben, um zu bewirken, dass die geregelte DC-Spannung an die Gate-Anschlüsse (G) des ersten und des zweiten MOSFET-Schalters angelegt wird, um dadurch den internen Kurzschlussschalter (121, 122) in einen eingeschalteten Zustand zu versetzen.

8. Schaltungsunterbrechervorrichtung (100) nach Anspruch 1, wobei der Shunt-Widerstand (R4) einen Widerstandswert umfasst, der eine Menge an Kurzschlussstrom begrenzt, die zwischen dem netzseitigen Phasenanschluss (100A) und dem netzseitigen Neutralleiteranschluss (100B) der Schaltungsunterbrechervorrichtung (100) fließt.

9. Schaltungsunterbrechervorrichtung (100) nach Anspruch 1, wobei die Steuerschaltungsanordnung (110) konfiguriert ist, um (i) eine Stromwellenform eines Laststroms zu erfassen, der in dem elektrischen Pfad zwischen dem netzseitigen Phasenanschluss und dem lastseitigen Phasenanschluss fließt, und (ii) ein Auftreten einer Kurzschlussfehlerbedingung basierend auf der erfassten Stromwellenform zu erkennen.

10. Schaltungsunterbrechervorrichtung (100) nach Anspruch 1, wobei die Steuerschaltungsanordnung (110) konfiguriert ist, um (i) eine Spannungswellenform auf dem elektrischen Pfad zwischen dem netzseitigen Phasenanschluss und dem lastseitigen Phasenanschluss zu erfassen und (ii) ein Auftreten einer Lichtbogenfehlerbedingung basierend auf der erfassten Spannungswellenform zu erkennen.

11. Steckdose, umfassend die Schaltungsunterbrechervorrichtung (100) nach Anspruch 1.

12. System, umfassend:
einen Schutzschalter (15), umfassend einen netzseitigen Eingangsanschluss (15A) und einen lastseitigen Ausgangsanschluss (15B), wobei der netzseitige Eingangsanschluss (15A) des Schutzschalters (15) mit einer Wechselstromstromquelle (AC-Stromquelle) (10) gekoppelt ist; und
die Schaltungsunterbrechervorrichtung (100) nach Anspruch 1, die mit dem lastseitigen Ausgangsanschluss (15B) des Schutzschalters (15) gekoppelt ist,
wobei der Fluss von Kurzschlussstrom zwischen dem netzseitigen Phasenanschluss (100A) und dem netzseitigen Neutralleiteranschluss (100B) der Schaltungsunterbrechervorrichtung (100) ausreichend ist, um den Schutzschalter (15) auszulösen.

13. System nach Anspruch 12, wobei der Schutzschalter (15) einen elektromechanischen Schutzschalter umfasst, der mindestens eines von einem elektromagnetischen Aktuatorelement und einem thermischen Aktuatorelement umfasst.

14. System nach Anspruch 12, wobei der Shunt-Widerstand (R4) einen Widerstandswert umfasst, der eine Menge an Kurzschlussstrom, die zwischen dem netzseitigen Phasenanschluss (100A) und dem netzseitigen Neutralleiteranschluss (100B) der Schaltungsunterbrechervorrichtung (100) fließt, auf nicht mehr als etwa das 3-Fache einer Nennstromstärke des Schutzschalters (15) begrenzt.

15. System nach Anspruch 12, wobei:
während des normalen Betriebs der Schaltungsunterbrechervorrichtung (100) eine Spannung (VS) an dem vierten Knoten (N4) als eine Massereferenz durch die Steuerschaltungsanordnung (110) genutzt wird, um eine Treiberspannung (V_{BE}) zu erzeugen, die an einen Steueranschluss (B) des Aktuatorschalters (124) in Bezug auf die Spannung (VS) des virtuellen Knotens N4 angelegt wird, um den Aktuatorschalter (124) in dem eingeschalteten Zustand zu halten; und
der Aktuatorschalter (124) in den ausgeschalteten Zustand versetzt wird, indem die Steuerschaltungsanordnung (110) den virtuellen Masseknoten (N4) mit dem Steueranschluss (B) des Aktuatorschalters (124) koppelt, um zu bewirken, dass sich der Betätigungsschalter (124) ausschaltet.

16. System nach Anspruch 12, wobei:
die Selbstvorspannungsschaltung (123) konfiguriert ist, um die geregelte DC-Spannung auch während Zeiträumen zu erzeugen und aufrechtzuerhalten, in denen der Betätigungsschalter (124) durch die Steuerschaltungsanordnung (110) in einem eingeschalteten Zustand gehalten wird, um den internen Kurzschlussschalter (121, 122) in einem ausgeschalteten Zustand zu halten; und
die Selbstvorspannungsschaltung (123) eine Spannungsklemmschaltung umfasst, die konfiguriert ist, um die geregelte DC-Spannung zu erzeugen, wobei die Spannungsklemmschaltung einen Kondensator (C1) und eine Zener-Diode (ZD) umfasst, die zwischen einem fünften Knoten (N5) und dem vierten Knoten (N4) parallel geschaltet sind.

17. System nach Anspruch 12, wobei:
der Betätigungsschalter (124) zwischen dem dritten Knoten (N3) und dem vierten Knoten (N4) gekoppelt ist und einen Steueranschluss (B) umfasst, der mit der Steuerschaltungsanordnung (110) gekoppelt ist; und
wobei die Steuerschaltungsanordnung (110) konfiguriert ist, um den Betätigungsschalter (124) in einen von (i) einem eingeschalteten Zustand, um dadurch die Gate- und Source-Anschlüsse des ersten MOSFET-Schalters (121) und des zweiten MOSFET-Schalters (122) kurzzuschließen und den internen Kurzschlussschalter (121, 122) in einen ausgeschalteten Zustand zu versetzen, und (ii) einem ausgeschalteten Zustand zu treiben, um zu bewirken, dass die geregelte DC-Spannung an die Gate-Anschlüsse (G) des ersten und des zweiten MOSFET-Schalters angelegt wird, um den internen Kurzschlussschalter (121, 122) in einen eingeschalteten Zustand zu versetzen.

18. Verfahren, umfassend:
Erzeugen, durch eine Schaltungsunterbrechervorrichtung (100), einer geregelten Gleichstromspannung (DC-Spannung) unter Verwendung von Strom, der aus einer Wechselstromstromquelle (AC-Stromquelle) (10) bezogen wird, die an einen netzseitigen Phasenanschluss (100A) und einen netzseitigen Neutralleiteranschluss (100B) der Schaltungsunterbrechervorrichtung (100) angelegt wird;
Erfassen (300, 301), durch eine Schaltungsunterbrechervorrichtung (100), eines Auftretens einer Fehlerbedingung in einem Zweigstromkreis, der durch einen Schutzschalter (15) geschützt ist; und
als Reaktion auf das Erfassen des Auftretens der Fehlerbedingung:
Unterbrechen (302), durch die Schaltungsunterbrechervorrichtung (100), eines Laststromflusses in dem Zweigstromkreis zu einer Last, die mit einem Lastanschluss der Schaltungsunterbrechervorrichtung (100) verbunden ist; und
Erzeugen (303), durch die Schaltungsunterbrechervorrichtung (100), eines Kurzschlusspfades, um zu ermöglichen, dass ein Kurzschlussstrom durch einen Shunt-Widerstand (R4) innerhalb der Schaltungsunterbrechervorrichtung (100) fließt, wobei der Fluss des Kurzschlussstroms innerhalb der Schaltungsunterbrechervorrichtung (100) bewirkt, dass der Schutzschalter (15) auslöst und eine Wechselstromstromquelle (AC-Stromquelle) von dem Zweigstromkreis trennt;
wobei das Erzeugen des Kurzschlusspfades das Ansteuern eines Betätigungsschalters (124) von einem eingeschalteten Zustand in einen ausgeschalteten Zustand umfasst, um zu bewirken, dass die geregelte Gleichstromspannung (DC-Spannung) an einen Steueranschluss eines internen Kurzschlussschalters (121, 122) angelegt wird, um den internen Kurzschlussschalter (121, 122) in einen eingeschalteten Zustand zu versetzen, um dadurch einen internen Kurzschlusspfad zwischen dem netzseitigen Phasenanschluss (100A) und dem netzseitigen Neutralleiteranschluss (100B) der Schaltungsunterbrechervorrichtung (100) zu erzeugen, und zu ermöglichen, dass der Kurzschlussstrom durch den Shunt-Widerstand (R4) zwischen dem netzseitigen Phasenanschluss und dem netzseitigen Neutralleiteranschluss der Schaltungsunterbrechervorrichtung (100) fließt, um zu bewirken, dass der Schutzschalter (15) auslöst; und
wobei der interne Kurzschlussschalter (121, 122) einen bidirektionalen Halbleiterschalter umfasst, umfassend einen ersten Metall-Oxid-Halbleiter-Feldeffekttransistor-Schalter (MOSFET-Schalter) (121) und einen zweiten MOSFET-Schalter (122), wobei der erste und der zweite MOSFET-Schalter Gate-Anschlüsse (G) umfassen, die gemeinsam mit einem dritten Knoten (N3) gekoppelt sind, um den Steueranschluss des internen Kurzschlussschalters bereitzustellen, und Source-Anschlüsse (S), die gemeinsam mit einem vierten Knoten (N4) gekoppelt sind, wobei der erste MOSFET-Schalter (121) einen Drain-Anschluss (D) umfasst, der mit dem ersten Knoten (N1) gekoppelt ist, wobei der zweite MOSFET-Schalter (122) einen Drain-Anschluss (D) umfasst, der mit dem zweiten Knoten (N2) gekoppelt ist, wobei der vierte Knoten (N4) einen virtuellen Masseknoten der internen Kurzschlussschalter-Schaltungsanordnung (120) umfasst, und wobei der vierte Knoten (N4) mit einer Steuerschaltungsanordnung (110) verbunden ist.

19. Verfahren nach Anspruch 18, wobei der Shunt-Widerstand (R4) einen Widerstandswert umfasst, der eine Menge des Kurzschlussstroms auf nicht mehr als etwa das 3-Fache eines Nennstroms des Schutzschalters (15) begrenzt.

20. Verfahren nach Anspruch 18, wobei die geregelte Gleichstromspannung (DC-Spannung) während Zeiträumen erzeugt und aufrechterhalten wird, in denen der Betätigungsschalter (124) in einem eingeschalteten Zustand gehalten wird, um den internen Kurzschlussschalter (121, 122) in einem ausgeschalteten Zustand zu halten.

## Revendications

1. Dispositif interrupteur de circuit (100), comprenant :
une borne de phase de ligne (100A), une borne de neutre de ligne (100B), une borne de phase de charge (100C) et une borne de neutre de charge (100D) ;
un commutateur à semi-conducteurs (101, 102) connecté en série dans un chemin électrique entre la borne de phase de ligne (100A) et la borne de phase de charge (100C) ;
un circuit de commutation de court-circuit interne (120) comprenant un commutateur de court-circuit interne (121, 122)
et une résistance de dérivation (R4) connectée en série entre un premier nœud (N1) et un deuxième nœud (N2), dans lequel le premier nœud (N1) est couplé à la borne de phase de ligne (100A) et le deuxième nœud (N2) est couplé à la borne de neutre de ligne (100B) ; un circuit à polarisation automatique (123) qui est configuré pour générer une tension en courant continu, CC, régulée à l'aide du courant tiré d'une source d'alimentation en courant alternatif (CA) (10) appliquée à la borne de phase de ligne (100A) et à la borne de neutre de ligne (100B), et un commutateur d'actionnement (124),
et un circuit de commande (110) couplé au commutateur à semi-conducteurs (101, 102) et au circuit de commutation de court-circuit interne (120) ;
dans lequel le commutateur de court-circuit interne (121, 122) comprend un commutateur à semi-conducteurs bidirectionnel comprenant un premier commutateur à transistor à effet de champ à semi-conducteur d'oxyde métallique (MOSFET) (121) et un second commutateur MOSFET (122), les premier et second commutateurs MOSFET comprenant des bornes de grille (G) qui sont couplées en commun à un troisième nœud (N3) pour fournir une borne de commande du commutateur de court-circuit interne, et des bornes de source (S) qui sont couplées en commun à un quatrième nœud (N4), dans lequel le premier commutateur MOSFET (121) comprend une borne de drain (D) qui est couplée au premier nœud (N1), dans lequel le second commutateur MOSFET (122) comprend une borne de drain (D) qui est couplée au deuxième nœud (N2),
dans lequel le quatrième nœud (N4) comprend un nœud de masse virtuelle du circuit de commutation de court-circuit interne (120), et dans lequel le quatrième nœud (N4) est connecté au circuit de commande (110) ;
dans lequel le circuit de commande (110) est configuré pour détecter une apparition d'une condition de défaut ;
dans lequel en réponse à la détection de l'apparition d'une condition de défaut, le circuit de commande (110) est configuré pour :
faire passer le commutateur à semi-conducteurs (101, 102) dans un état hors tension ; et
faire passer le commutateur à actionnement (124) d'un état sous tension à un état hors tension pour amener la tension en CC régulée à être appliquée à la borne de commande du commutateur de court-circuit interne (121, 122) et ainsi placer le commutateur de court-circuit interne (121, 122) dans un état sous tension pour générer un chemin de court-circuit interne entre le premier nœud (N1) et le deuxième nœud (N2).

2. Dispositif interrupteur de circuit (100) selon la revendication 1, dans lequel :
lors du fonctionnement normal du dispositif interrupteur de circuit (100), une tension (VS) sur le quatrième nœud (N4) est utilisée comme référence de masse par le circuit de commande (110) pour générer une tension de commande (V_{BE}) qui est appliquée à une borne de commande (B) du commutateur à actionneur (124) par rapport à la tension (VS) du nœud virtuel N4, pour maintenir le commutateur à actionneur (124) dans l'état sous tension ; et
le commutateur à actionneur (124) est placé dans l'état hors tension par le circuit de commande (110) couplant le nœud de masse virtuelle (N4) à la borne (B) de commande du commutateur à actionneur (124) pour amener le commutateur à actionneur (124) à se désactiver.

3. Dispositif interrupteur de circuit (100) selon la revendication 1, dans lequel la résistance de dérivation (R4) est connectée entre la borne de drain (D) du second commutateur MOSFET (122) et le deuxième nœud (N2).

4. Dispositif interrupteur de circuit (100) selon la revendication 1, dans lequel le circuit à polarisation automatique (123) est configuré pour générer et maintenir la tension en CC régulée également pendant les périodes où le commutateur à actionnement (124) est maintenu dans un état sous tension par le circuit de commande 110 pour maintenir le commutateur de court-circuit interne (121, 122) dans un état hors tension.

5. Dispositif interrupteur de circuit (100) selon la revendication 4, dans lequel le circuit à polarisation automatique (123) comprend un circuit limiteur de tension configuré pour générer la tension en CC régulée, dans lequel le circuit limiteur de tension comprend un condensateur (C1) et une diode Zener (ZD) connectés en parallèle entre un cinquième nœud (N5) et le quatrième nœud (N4).

6. Dispositif interrupteur de circuit (100) selon la revendication 1, dans lequel le commutateur à actionnement (124) est connecté entre le troisième nœud (N3) et le quatrième nœud (N4) et comprend une borne de commande couplée au circuit de commande (110).

7. Dispositif interrupteur de circuit (100) selon la revendication 1, dans lequel le circuit de commande (110) est configuré pour faire passer le commutateur à actionnement (124) dans l'un parmi (i) un état sous tension pour dériver ainsi la grille et les bornes de source du premier commutateur MOSFET (121) et du second commutateur MOSFET (122) et placer le commutateur de court-circuit interne (121, 122) dans un état hors tension et (ii) un état hors tension pour amener la tension en CC régulée à être appliquée aux bornes (G) de grille des premier et second commutateurs MOSFET pour placer ainsi le commutateur de court-circuit interne (121, 122) dans un état sous tension.

8. Dispositif interrupteur de circuit (100) selon la revendication 1, dans lequel la résistance de dérivation (R4) comprend une valeur de résistance qui limite une quantité de courant de court-circuit qui circule entre la borne de phase de ligne (100A) et la borne de neutre de ligne (100B) du dispositif interrupteur de circuit (100).

9. Dispositif interrupteur de circuit (100) selon la revendication 1, dans lequel le circuit de commande (110) est configuré pour (i) détecter une forme d'onde de courant d'un courant de charge circulant dans le chemin électrique entre la borne de phase de ligne et la borne de phase de charge et (ii) détecter une apparition d'une condition de défaut de court-circuit sur la base de la forme d'onde de courant détectée.

10. Dispositif interrupteur de circuit (100) selon la revendication 1, dans lequel le circuit de commande (110) est configuré pour (i) détecter une forme d'onde de tension sur le chemin électrique entre la borne de phase de ligne et la borne de phase de charge et (ii) détecter une apparition d'une condition de défaut d'arc sur la base de la forme d'onde de tension détectée.

11. Prise électrique comprenant le dispositif interrupteur de circuit (100) selon la revendication 1.

12. Système comprenant :
un disjoncteur (15) comprenant une borne d'entrée de ligne (15A) et une borne de sortie de charge (15B), dans lequel la borne d'entrée de ligne (15A) du disjoncteur (15) est couplée à une source d'alimentation en courant alternatif (CA) (10) ; et
le dispositif interrupteur de circuit (100) selon la revendication 1, couplé à la borne de sortie de charge (15B) du disjoncteur (15),
dans lequel la circulation du courant de court-circuit entre la borne de phase de ligne (100A) et la borne de neutre de ligne (100B) du dispositif interrupteur de circuit (100) est suffisante pour déclencher le disjoncteur (15).

13. Système selon la revendication 12, dans lequel le disjoncteur (15) comprend un disjoncteur électromécanique comprenant au moins l'un parmi un élément à actionneur électromagnétique ou un élément à actionneur thermique.

14. Système selon la revendication 12, dans lequel la résistance de dérivation (R4) comprend une valeur de résistance qui limite une quantité de courant de court-circuit qui circule entre la borne de phase de ligne (100A) et la borne de neutre de ligne (100B) du dispositif interrupteur de circuit (100) à une valeur ne dépassant pas environ 3 fois un courant nominal du disjoncteur (15).

15. Système selon la revendication 12, dans lequel :
lors du fonctionnement normal du dispositif interrupteur de circuit (100), une tension (VS) sur le quatrième nœud (N4) est utilisée comme référence de masse par le circuit de commande (110) pour générer une tension de commande (V_{BE}) qui est appliquée à une borne de commande (B) du commutateur à actionneur (124) par rapport à la tension (VS) du nœud virtuel N4, pour maintenir le commutateur à actionneur (124) dans l'état sous tension ; et
le commutateur à actionneur (124) est placé dans l'état hors tension par le circuit de commande (110) couplant le nœud de masse virtuelle (N4) à la borne (B) de commande du commutateur à actionneur (124) pour amener le commutateur à actionneur (124) à se désactiver.

16. Système selon la revendication 12, dans lequel :
le circuit à polarisation automatique (123) est configuré pour générer et maintenir la tension en CC régulée également pendant les périodes où le commutateur à actionnement (124) est maintenu dans un état sous tension par le circuit de commande 110 pour maintenir le commutateur de court-circuit interne (121, 122) dans un état hors tension ; et
le circuit à polarisation automatique (123) comprend un circuit limiteur de tension configuré pour générer la tension en CC régulée, dans lequel le circuit limiteur de tension comprend un condensateur (C1) et une diode Zener (ZD) connectés en parallèle entre un cinquième nœud (N5) et le quatrième nœud (N4).

17. Système selon la revendication 12, dans lequel :
le commutateur à actionnement (124) est connecté entre le troisième nœud (N3) et le quatrième nœud (N4) et comprend une borne de commande (B) couplée au circuit de commande (110) ; et
le circuit de commande (110) est configuré pour faire passer le commutateur à actionnement (124) dans l'un parmi (i) un état sous tension pour dériver ainsi la grille et les bornes de source du premier commutateur MOSFET (121) et du second commutateur MOSFET (122) et placer le commutateur de court-circuit interne (121, 122) dans un état hors tension et (ii) un état hors tension pour amener la tension en CC régulée à être appliquée aux bornes (G) de grille des premier et second commutateurs MOSFET pour placer le commutateur de court-circuit interne (121, 122) dans un état sous tension.

18. Procédé, comprenant :
la génération, par un dispositif interrupteur de circuit (100), d'une tension en courant continue (CC) régulée à l'aide du courant tiré d'une source d'alimentation en courant alternatif (CA) (10) appliquée à une borne de phase de ligne (100A) et à une borne de neutre de ligne (100B) du dispositif interrupteur de circuit (100) ;
la détection (300, 301), par un dispositif interrupteur de circuit (100), d'une apparition d'une condition de défaut sur un circuit de dérivation qui est protégé par un disjoncteur (15) ; et
en réponse à la détection de l'apparition de la condition de défaut :
l'interruption (302), par le dispositif interrupteur de circuit (100), d'une circulation de courant de charge sur le circuit de dérivation vers une charge connectée à une borne de charge du dispositif interrupteur de circuit (100) ; et
la génération (303), par le dispositif interrupteur de circuit (100), d'un chemin de court-circuit pour permettre à un courant de court-circuit de circuler à travers une résistance de dérivation (R4) à l'intérieur du dispositif interrupteur de circuit (100), dans lequel la circulation du courant de court-circuit à l'intérieur du dispositif interrupteur de circuit (100) amène le disjoncteur (15) à se déclencher et à déconnecter une source d'alimentation en courant alternatif (CA) du circuit de dérivation ;
dans lequel la génération du chemin de court-circuit consiste à faire passer un commutateur à actionnement (124) d'un état sous tension à un état hors tension pour amener la tension en CC régulée à être appliquée à une borne de commande d'un commutateur de court-circuit interne (121, 122) pour placer le commutateur de court-circuit interne (121, 122) dans un état sous tension afin de générer ainsi un chemin de court-circuit interne entre la borne de phase de ligne (100A) et la borne de neutre de ligne (100B) du dispositif interrupteur de circuit (100), et permettre au courant de court-circuit de circuler à travers la résistance de dérivation (R4) entre la borne de phase de ligne et la borne de neutre de ligne du dispositif interrupteur de circuit (100) pour amener le disjoncteur (15) à se déclencher ; et
dans lequel le commutateur de court-circuit interne (121, 122) comprend un commutateur à semi-conducteurs bidirectionnel comprenant un premier commutateur à transistor à effet de champ à semi-conducteurs d'oxyde métallique (MOSFET) (121) et un second commutateur MOSFET (122), les premier et second commutateurs MOSFET comprenant des bornes de grille (G) qui sont couplées en commun à un troisième nœud (N3) pour fournir la borne de commande du commutateur de court-circuit interne, et des bornes de source (S) qui sont couplées en commun à un quatrième nœud (N4), dans lequel le premier commutateur MOSFET (121) comprend une borne de drain (D) qui est couplée au premier nœud (N1), dans lequel le second commutateur MOSFET (122) comprend une borne de drain (D) qui est couplée au second nœud (N2), dans lequel le quatrième nœud (N4) comprend un nœud de masse virtuelle du circuit de commutation de court-circuit interne (120), et dans lequel le quatrième nœud (N4) est connecté au circuit de commande (110).

19. Procédé selon la revendication 18, dans lequel la résistance de dérivation (R4) comprend une valeur de résistance qui limite une amplitude du courant de court-circuit à une valeur ne dépassant pas environ 3 fois un courant nominal du disjoncteur (15).

20. Procédé selon la revendication 18, dans lequel la tension en CC régulée est générée et maintenue pendant les périodes où le commutateur à actionnement (124) est maintenu dans un état sous tension pour maintenir le commutateur de court-circuit interne (121, 122) dans un état hors tension.
